# EUROPEAN PATENT APPLICATION

(11) **EP 2 239 151 A1**
(43) Date of publication of application: **13.10.2010**
(21) Application number: 10003774.6
(22) Date of filing: 08.04.2010
(51) Int. Cl.: B60B 3/16

(54) **Insert, set of inserts and series of sets of inserts to be applied in a bore or a plurality of bores in the rim of a wheel, as well as rim wherein such inserts are applied**

(30) Priority: 10.04.2009 BE 200900229
(71) Applicant: Jacobs Trading n.v., 2480 Dessel (BE)
(72) Inventor: Jacobs, Bart, 2470 Retie (BE)
(74) Representative: Donné, Eddy

(57) **Abstract**

Insert (11) to be provided in an opening (12) in the rim (6) of a wheel (2) which is longitudinal in accordance with a longitudinal opening (12) in the rim (6) and which is tapered over at least a part (26) of its height (H) in the direction (RR') of a passage (10) in the longitudinal insert (11), whereby a part (25) connecting to the narrowest piece of the tapered part (26) is made straight and whereby ridges (24) are provided on the outer edge (23) extending in the direction of the passage (10) and over the straight part (25).

## Description

The present invention concerns an insert or several inserts designed to be applied in the rim of a wheel, such as for example in a car wheel or in the wheel of a lorry or the like.

Certain types of inserts are already known for this purpose.

These known inserts are usually formed of a metal piece provided with a passage through which can be provided a wheel bolt so as to fix the wheel to a wheel hub.

However, according to the present state of the art, the inserts are merely designed to be provided in a circular bore or opening in the rim so as to form a support for a bolt or nut which is used to fix the wheel.

Also, to this aim, the known inserts are circular shaped.

However, a major disadvantage of the known systems is that there are many types of wheels with varying pitches, whereby in other words the diameter over which the bolts and holes are provided in the rim of the wheel for fixing the wheel to a wheel hub differs depending on the wheel.

The pitch hereby typically varies between a diameter of 100 mm and 130 mm for car wheels.

A major disadvantage of this known situation is that an adapted rim must be provided for every type of wheel, whereby openings or holes are provided in the rim corresponding to the pitch that is applied for the fastening bolts and/or insert nuts of the wheel.

As a consequence, dealers in wheels and rims must have large stocks, which is expensive of course.

Moreover, with the present situation it is impossible to standardise the rims of wheels, since a wheel, depending on what vehicle it is applied, will require another rim with an adapted pitch.

Another disadvantage of the known wheels is that they often cannot be switched from one vehicle to another one because of the varying pitches.

Also, the present invention aims to remedy one or several of the above-mentioned and other disadvantages.

In particular, the invention aims a solution whereby the rims of wheels are manufactured universally, irrespective of the type of vehicle on which the wheel is to be provided, or at least for a certain range of vehicles.

To this end, the present invention concerns an insert to be provided in an opening in the rim of a wheel, formed of a piece, preferably of metal, in which is provided a passage through which can be provided a wheel bolt for fixing the wheel to a wheel hub, whereby this insert is moreover longitudinal in correspondence with a longitudinal opening in the rim.

The longitudinal shape of this type of insert in accordance with the invention and of an accompanying opening in the rim is particularly advantageous, since the rims can be made as standard in this way by providing the required longitudinal openings in the spokes.

Adapted inserts can hereby be provided as a function of the required wheel pitch, whereby the position of the passage in the inserts varies depending on the required pitch so as to be able to fix the wheel on vehicles with varying pitches.

According to a preferred embodiment of an insert in accordance with the invention, an insert according to the invention is at least partly tapered crosswise to the longitudinal direction of the longitudinal insert.

Preferably, the insert is at least partly tapered on all side edges, such as the outer shape of a tub.

Further, the part connecting to the narrowest piece of the tapered part of the insert is preferably made straight and not tapered.

This tapered shape, part of an insert with a connecting straight part of an insert and thus also of the opening in the rim working in conjunction with the latter, is advantageous as the insert is put perfectly in place with this shape while it is being provided in a rim.

The straight part hereby makes sure that when the bolts and nuts are being tightened, the insert does not end up slantingly in the rim under the influence of the tapered part.

Moreover, the insert will be fixed tightly in the rim in this way.

Besides, the rim is preferably made of aluminium, or of a similar material, as such rims are usually thicker than steel rims, such that said partly tapered insert can be easily provided therein.

The insert itself is preferably made of steel, since it must be able to resist the large forces of the bolts and nuts while they are being screwed down, as well as the weight of the vehicle which is transferred to the wheel via said bolts.

According to an even more preferred embodiment of an insert according to the invention, the insert is made asymmetrical in relation to a plane which is crosswise to the longitudinal direction of the longitudinal insert.

In this manner is obtained that such an insert can only be provided in one way in a corresponding longitudinal opening in a rim, and it is excluded for such an insert to be provided for example in two ways in such an opening in a rim, in particular according to a first position and according to a second position whereby the insert is rotated 180° in relation to the first position.

Preferably, an insert according to the invention is provided with a curve on one of the longitudinal ends to this end, and it is preferably angular on the opposite longitudinal end.

According to an even more preferred embodiment of an insert in accordance with the invention, the insert is provided with ridges on its outer edge, whereby the ridges preferably mainly extend in the direction of the passage.

The aim of said embodiment with ridges is for the longitudinal openings in a rim not to correspond entirely with the longitudinal shape of an insert, whereby, in particular, a longitudinal opening is preferably a bit smaller than the perimeter of an insert, such that, with such an embodiment of an insert in accordance with the invention, the insert will be fixed very tightly in the longitudinal opening in the rim, since the introduction of the insert in the smaller longitudinal opening in the rim requires a certain deformation, preferably an elastic deformation of the insert or the rim.

According to an even more preferred embodiment of an insert in accordance with the invention, the length of the insert is sufficiently large, such that during the production of such an insert, in particular while a passage is being provided in the insert, it is possible to select the position of the passage in the insert, according to the longitudinal direction, for example by means of a boring operation.

Preferably, the length of the insert is at least such that it exceeds the diameter of the passage, through which a bolt or nut of the wheel must be provided, by at least 15 mm.

Indeed, with the usual car wheels there is a variation in pitch, measured according to the diameter, between 100 mm and 130 mm, which corresponds to a difference of 15 mm measured according to the radius.

Also, with such a sufficiently longitudinal insert in accordance with the invention, it is possible to vary the position of the passage for the bolts or nuts of the wheel as a function of the most common wheel configurations.

According to another preferred embodiment of an insert, the passage for the bolts or nuts of a wheel is made at least partly conical.

With this embodiment, it is possible to tighten the bolts or nuts really tightly while fixing the wheel.

Another aspect of the invention which is particularly important for traders in rims and wheels, is that a set of inserts as described above is preferably provided, whereby the number of inserts of the set corresponds to the number of longitudinal openings in the rim for the introduction of said inserts, and whereby every insert of the set has the same shape, and in particular the position of the passage in every insert of the set is the same.

Such a set may be put for example in its own packaging so as to obtain a sort of mounting set, handy in use and practical for the sale.

Further, the invention aims to provide a series of such sets whereby the position of the passage in the inserts of a set of inserts from a series differs from one set to another, such that it is possible to provide a rim having longitudinal openings corresponding to the shape of the inserts on wheel hubs with different pitch diameters by selecting an appropriate set from the series of sets.

It is clear that, in this manner, one can work with standard rims, whereby a dealer can simply give the appropriate set of inserts in accordance with the required pitch for the application concerned.

Preferably, according to the invention, some mark or inscription is provided in the inserts indicating for example the pitch diameter, such that the user knows immediately what set of inserts he holds in his hands.

The series of insert sets preferably comprises a set for a minimum pitch and a set for a maximum pitch, whereby the minimum and maximum pitch differ at least 15 mm.

Of course, the reason is once again the same, namely that the common pitch diameters are situated between 100 mm and 130 mm.

Naturally, other dimensions may be used for more divergent pitches.

The invention also concerns a rim which can be bolted by means of a set of inserts as described above, whereby the rim, particularly in the spokes, is provided with a longitudinal opening in accordance with the outer shape of the inserts of the set, and situated at the appropriate distance from the centre of the rim of course, corresponding to the pitch or pitches to be realised.

An advantage of such rims is that the rims can be applied to wheel hubs with varying pitches by providing an appropriate set of inserts from a series as described above.

In order to better explain the characteristics of the invention, the following preferred embodiments of an insert and rim in accordance with the invention are described by way of example only without being limitative in any way, with reference to the accompanying drawings, in which:
figure 1 is a side-view of a vehicle;
figure 2 shows a wheel hub of the vehicle from figure 1 to a larger scale and seen in perspective, as well as a dismounted wheel whereby inserts according to the invention have been applied in the rim of the wheel;
figure 3 is a view in perspective of a longitudinal opening in the rim in accordance with the invention of figure 2, which opening is used to introduce an insert in accordance with the invention;
figure 4 shows a view in perspective of an insert according to the invention as applied in the rim of figure 3;
figure 5 is a view from above on the insert from figure 3;
figure 6 shows a section through the insert from figure 4 according to cut VI-VI;
figure 7 is a section, seen in perspective, through the rim and the insert according to the cut indicated by VII-VII in figure 3;
figure 8 schematically shows a section according to line VIII-VIII in figure 7 through the rim, as well as the insert, whereby the wheel has been fixed by means of a bolt and nut;
figure 9 is a schematic view from above on a set of inserts in accordance with the invention, with varying positions of the passages in the inserts.

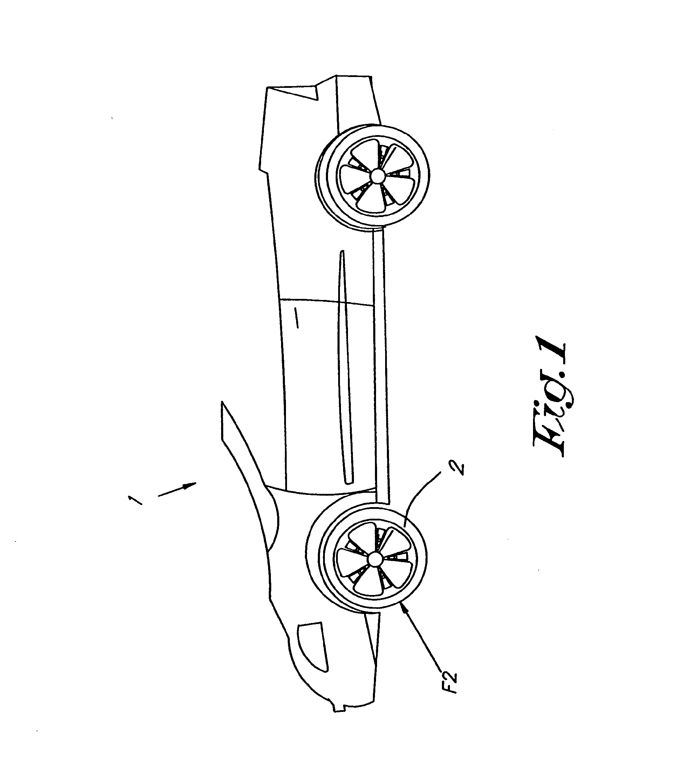

Figure 1 represents a vehicle 1, in particular a passenger car 1 provided with wheels 2.

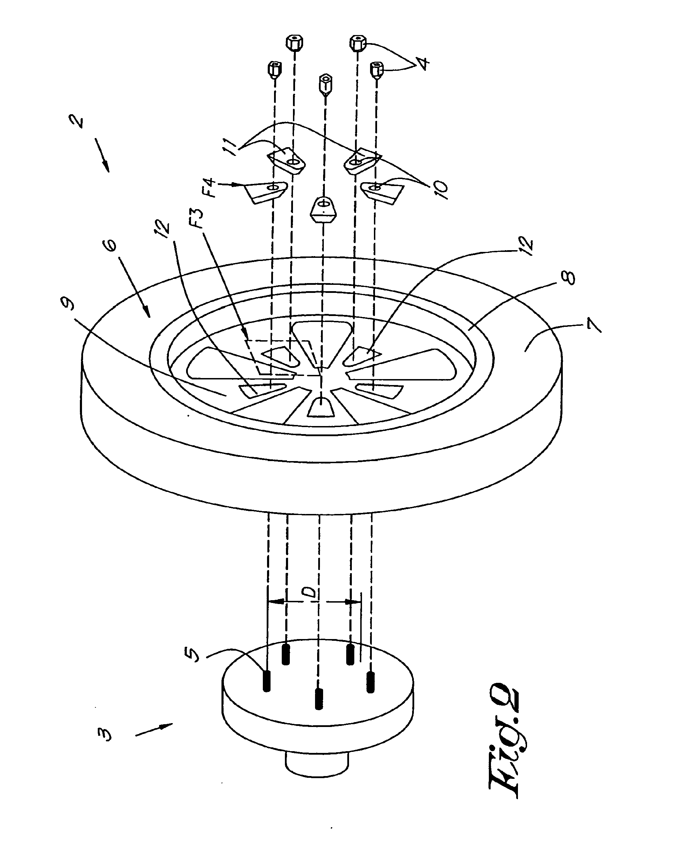

Such a wheel 2 of the car 1 is represented more in detail in figure 2, whereby the wheel 2 has been taken from the wheel hub 3 by loosening the nuts 4.

For, as is customary, the wheel hub 3 is provided with bolts 5 which are fixed on the wheel hub 3 at regular distances from one another in a pitch circle round the centre of the wheel hub 3, which pitch circle in this case has a pitch diameter D.

The wheel 2 itself is formed of a wheel rim 6 around which is provided a tyre 7.

The rim 6 is formed of a more or less cylindrical outer drum 8 which is supported in relation to the wheel hub by means of spokes 9.

The number of spokes 9 hereby corresponds to the number of bolts 5 on the wheel hub 3.

In order to apply the bolts 5 on the wheel hub 3 through the rim 6, openings or passages 10 are provided in the spokes 9 in accordance with the positions of the bolts 5 on the wheel hub 3.

To this end, inserts 11 are provided in every spoke 9 of the rim 6 in longitudinal openings 12 which are provided in the spokes 9 to that end, whereby a passage 10 is formed in said insert 11.

With the known rims, circular inserts are often applied, however, whereby consequently also an accompanying opening in the rim is circular.

With such a known insert, an inner passage is thereby provided which is usually at least partly conical.

Hence, the known inserts only serve to obtain a seat in which a bolt or nut 4 can rest when the wheel 2 is being fixed on the wheel hub 3.

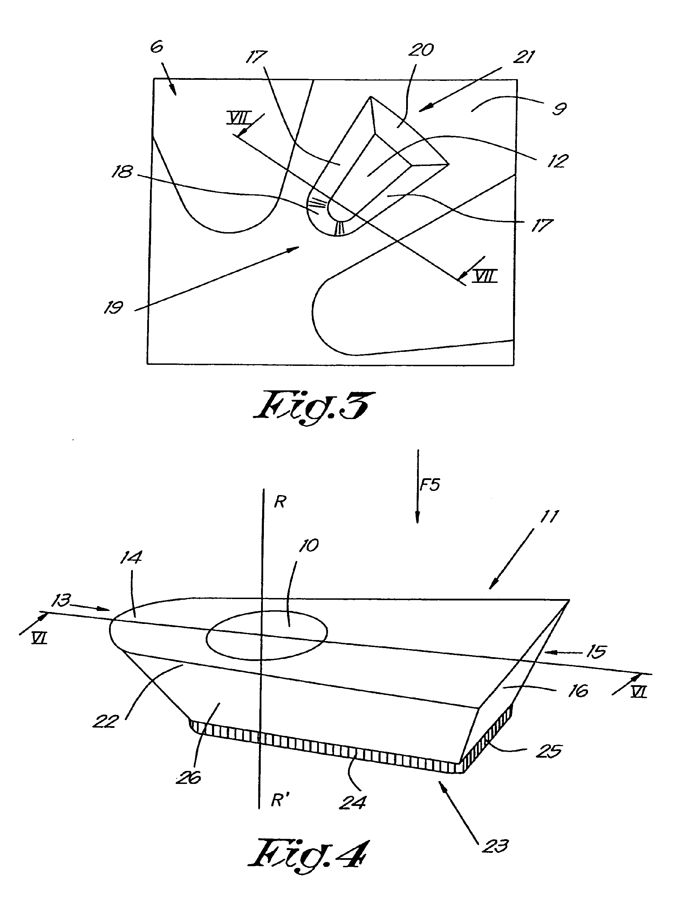

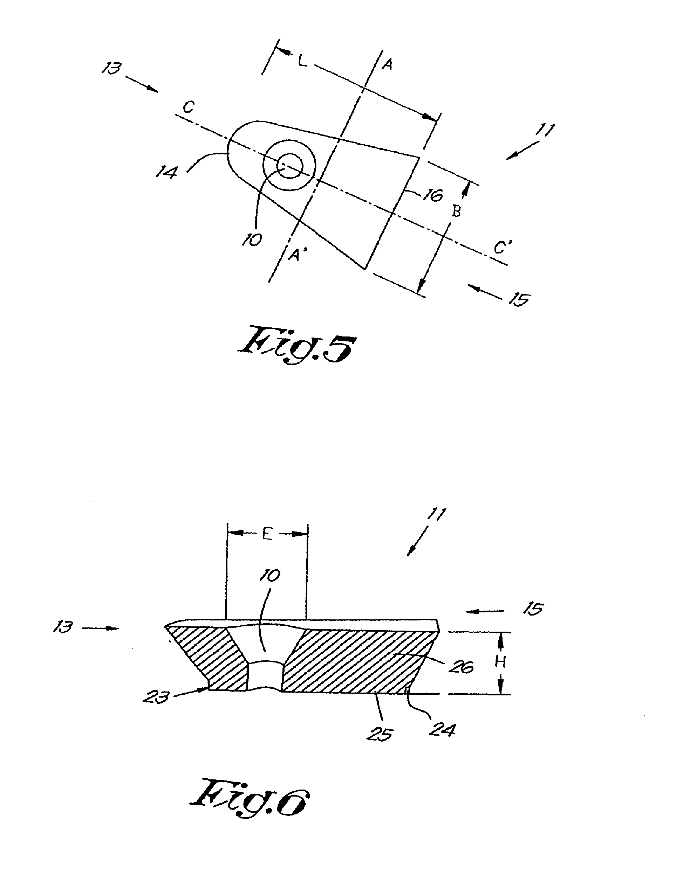

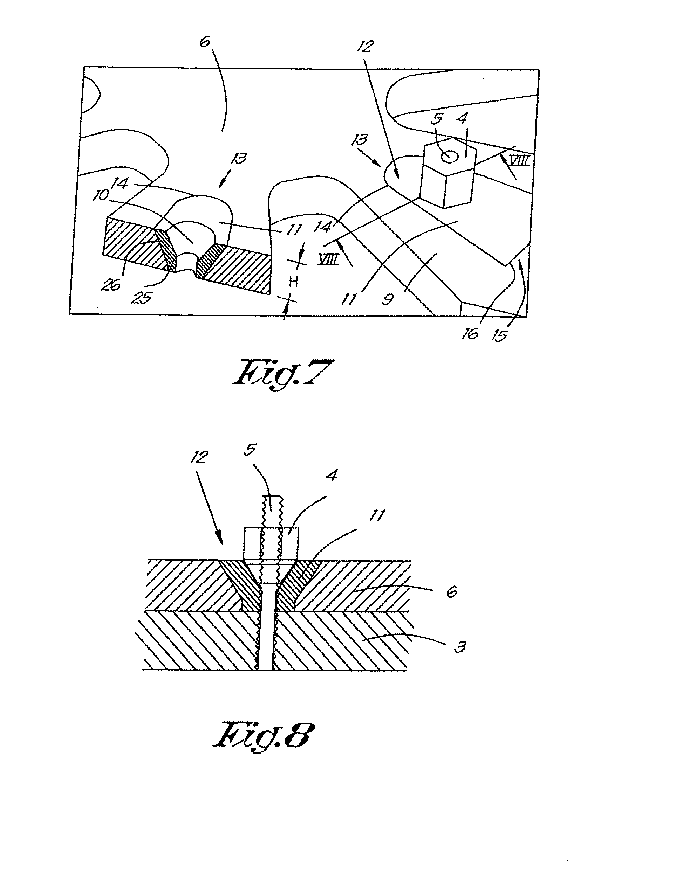

As applied in the wheel 2 from figure 2 and as represented more in detail in figures 3 to 8, the inserts 11 according to the invention look entirely different, however.

Indeed, such an insert 11 according to the invention is made longitudinal.

Naturally, according to the invention, also the openings 12 in the rim 6, in which said longitudinal inserts 11 are to be provided, must accordingly be made longitudinal.

According to a preferred embodiment of an insert 11 in accordance with the invention and as is clearly represented for example in figure 4, an insert 11 according to the invention is tapered over at least a part of its height H in the direction RR' in accordance with the passage 10 in the insert 11.

Preferably even, an insert 11 according to the invention is tapered on all side edges over at least a part of its height H, whereby the openings 12 in the rim 6 are complementary to the latter, of course, or at least partly complementary.

In this way, an insert 11 will be perfectly positioned in a bore 12 while the nuts 4 are being screwed down on the bolts 5, thus providing a rigid connection.

Another preferred characteristic of an insert 11 according to the invention is that it is made asymmetrical in relation to a plane AA' crosswise to the longitudinal direction CC' of the longitudinal insert 11.

In the embodiment as discussed here, this is obtained by providing the insert 11 with a curve 14 on one of the longitudinal ends and by making the insert 11 on the opposite longitudinal end angular by shaping said far end 15 as a flat surface 16.

The tapered lateral faces 17 of a longitudinal opening 12 in a spoke 9 are accordingly provided with a curve 18 as well on one longitudinal end 19 of the opening 12, whereas it is provided with a flat lateral face 20 on the other longitudinal end 21.

It is clear that there is only one way to introduce such an insert 11 in a longitudinal opening 12 in the spokes 9 of the rim 6, and not the other way round, for example, by turning the insert 11 over 180°.

This is important since the passage 10 in the insert 11, shown in figures 4 to 6, is not provided in the middle of the insert 11, but towards the longitudinal end 13 of the insert 11.

Indeed, the aim for the passages 10 is that they coincide with the positions of the bolts 5 on the wheel hub 3, after the inserts 11 have been introduced in the rim 6, in other words that the passages 10, after the assembly, are situated in a pitch circle with a diameter D on the rim 6.

In this case, it is found that the passage 10 must be provided on the far end 13 to that end.

If an insert 11 would be symmetrical in relation to the plane AA', it would be easy for a mechanic to make a mistake and introduce an insert 11 the other way round in a longitudinal opening 12, for example, as a result of which the passage 10 of the insert 11 would not be situated on the aforesaid pitch circle with diameter D.

The passage 10 in an insert 11 according to the invention, just as the known inserts 11, is also made conical on the widest side 22 of the tapered insert 11.

This is only logical, since the bolts 5 or nuts 4 which are normally used also have a conical part with which they rest in the rim 6.

In order to make sure that the inserts 11 cannot come off after a first assembly in the rim 6, the inserts 11 are provided with ridges 24, preferably on their outer edge 23.

In this case, the ridges 24 are for example provided in a non-tapered, i.e. a straight part 25 of the insert which is connected to the narrowest piece of the tapered part 26 of the insert 11.

As already explained in the introduction, the straight part of the insert 11 hereby makes sure that, while the bolts 5 and nuts 4 are being tightened, the insert 11 will not end up slantingly in the rim 6 under the influence of the tapered part 26.

Since the ridges 24 are situated in the straight part 25 of the insert 11, they mainly extend in the direction RR' of the passage 10.

An insert 11 according to this embodiment can be easily introduced in a longitudinal opening 12 in the rim 6 corresponding thereto, since the ridges 24 extend in the direction according to which the insert 11 is introduced in the rim 6.

The longitudinal opening 12 in the rim 6 is hereby preferably somewhat smaller than the insert 11, preferably with a difference in accordance with the thickness of the ridges 24 or a part thereof, such that the ridges 24 deform during the introduction in the longitudinal opening 12, thus fixing the insert 11 in the rim 6.

Said deformation is preferably an elastic deformation, i.e. a deformation that will automatically disappear as soon as the load has been removed, thus avoiding a permanent or plastic deformation of the insert 11 or the rim 6.

Another major characteristic of an insert 11 in accordance with the invention is its length L.

Said length L preferably amounts to at least the largest diameter E of the passage 10 plus 15 mm.

The reason therefore is that, in this manner, the position of a passage 10 in the insert 11 may vary some 15 mm over the length L of the insert 11.

The size of this variation, of the position of the passage 10 in the insert 11, corresponds to half the usual variation of the pitch diameter D in the different wheel types, which pitch diameter D is normally situated between 100 mm and 130 mm.

Typical dimensions for an insert 11 according to the invention would for example be a length L of some 45 mm and a width B of some 26 mm.

Naturally, if necessary, other lengths L and widths B could be used for the inserts 11, if this were better in practice or, for example, in case the same method would be applied for standardising rims 6 for lorries or the like, which have other dimensions of course.

As explained in the introduction, the invention aims to provide sets 27 of inserts 11, whereby the number of inserts 11 of a set 27 corresponds to the number of longitudinal openings 12 in the rim 6 for introducing said inserts 11.

Every insert 11 of a set 27 hereby has the same shape. In particular, the position of the passage 10 in each of the inserts 11 of a set 27 is the same.

In order to be able to mount a rim 6 in accordance with the invention on several vehicles 1 having different pitch diameters D, a series 28 of sets 27 is preferably provided, whereby the position of the passage 10 in the inserts 11 of a set 27 from the series 28 differs from one set to another.

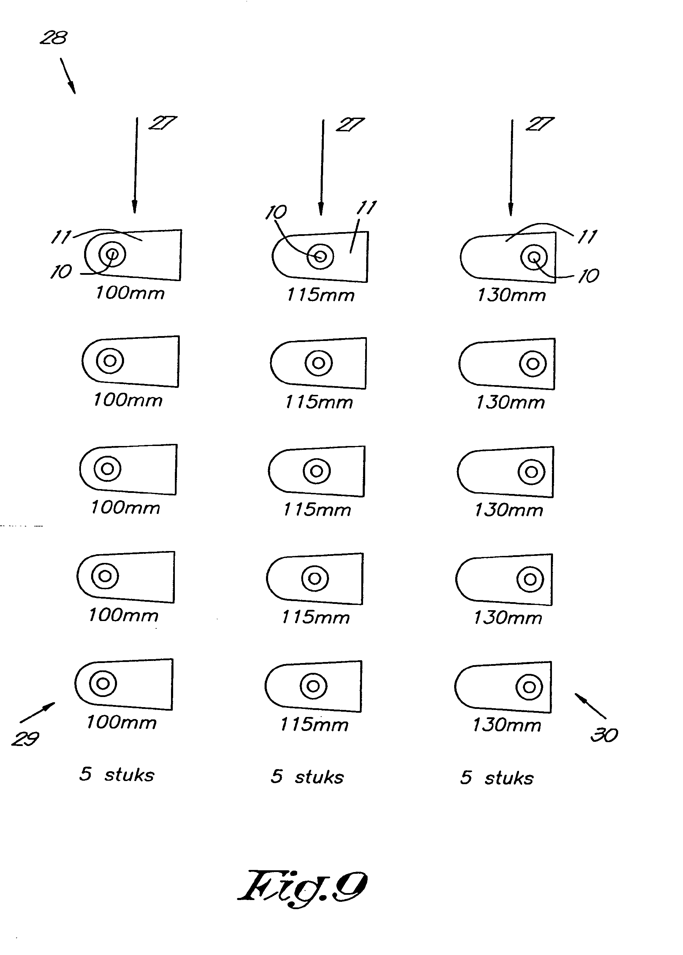

Such sets 27 and such a series 28 of sets of inserts 11 are given by way of example in figure 9.

The inserts 11 of every set 27 are hereby labelled with the pitch diameter D for which they are meant, for example by engraving the pitch diameter D in the inserts 11 or the like.

In this manner, the risk of mistakes is strongly reduced.

The series 28 of sets of inserts 11 comprises a set 29 for a minimum pitch diameter D, which in this case is 100 mm, and a set 30 for a maximum pitch diameter D, which in this case is 130 mm, which are the usual minimum and maximum pitch diameters D of the most common car wheels 2.

Intermediate sets 27 may hereby be provided as desired for intermediate pitch diameters D.

The advantage of inserts 11 and accompanying rims 6 according to the invention is more than clear, namely in that a single rim 6, provided with longitudinal openings 12 in the spokes 9 in accordance with the inserts 11, can be provided on vehicles 1 with different pitch diameters D by simply selecting the right set 27 of inserts 11 from the series 28.

The invention is by no means restricted to the embodiment of an insert 11, a set 27 of inserts 11 or a series 28 of sets 27 of inserts 11 and an accompanying rim 6 in accordance with the invention described by way of example and represented in the accompanying drawings; on the contrary, such inserts 11 and rims 6 can be made in many different ways while still remaining within the scope of the invention.

## Claims

1. Insert (11) to be provided in an opening (12) in the rim (6) of a wheel (2), formed of a piece, preferably of metal, in which is provided a passage (10) through which can be provided a wheel bolt (5) for fixing the wheel (2) to a wheel hub (3), **characterised in that** the insert (11) is longitudinal in accordance with a longitudinal opening (12) in the rim (6), whereby the insert (11) is tapered over at least a part (26) of its height (H) in the direction (RR') of the passage (10) in the longitudinal insert (11), whereby a part (25) connecting to the narrowest piece of the tapered part (26) of the insert (11) is made straight and not tapered, and whereby the insert (1) is provided with ridges (24) on its outer edge (23) which mainly extend in the direction of the passage (10) and over the straight part (25) of the insert (11).

2. Insert (11) according to claim 1, **characterised in that** it is tapered over at least a part (26) of its height (H) on all side edges, such as the outer shape of a tub.

3. Insert (11) according to any one of the preceding claims, **characterised in that** it is made asymmetrical in relation to a plane which is crosswise to the longitudinal direction (CC) of the longitudinal insert (11).

4. Insert (11) according to claim 3, **characterised in that** it is provided with a curve (14) on one of the longitudinal ends (13).

5. Insert (11) according to claims 3 and 4, **characterised in that** it is made angular on the opposite longitudinal end (15).

6. Insert (11) according to any one of the preceding claims, **characterised in that** its length (L) amounts to at least the largest diameter (E) of the passage (10) plus 15 mm.

7. Insert (11) according to any one of the preceding claims, **characterised in that** the passage (10) is made at least partly conical.

8. Insert (11) according to any one of the preceding claims, **characterised in that** it is made of steel.

9. Set (27) of inserts (11) according to any one of the preceding claims, **characterised in that** the number of inserts (11) of the set (27) corresponds to the number of longitudinal openings (12) in the rim (6) for introducing said inserts (11), whereby every insert (11) of the set (27) has the same shape and whereby in particular the position of the passage (10) in every insert (11) of the set (27) is the same.

10. Series (28) of sets (27) in accordance with claim 9, **characterised in that** the position of the passage (10) in the inserts (11) of a set (27) of inserts (11) from the series (28) differs from one set (27) to another one (27), such that it is possible to provide a rim (6) with longitudinal openings (12) corresponding to the shape of the inserts (11) on wheel hubs (3) with different pitch diameters (D) by selecting an appropriate set (27) from the series (28).

11. Series (28) of sets (27) of inserts (11) according to claim 10, **characterised in that** the series (28) comprises at least a set (29) for a minimum pitch and a set (30) for a maximum pitch, which minimum and maximum pitches differ at least 15 mm.

12. Rim (6) which can be bolted by means of a set (27) of inserts (11) in accordance with claim 9, **characterised in that** the rim (6) in the spokes (9) is provided with a longitudinal opening (12) in accordance with the longitudinal shape of the inserts (11) of the set (27).

13. Rim in accordance with claim 12, **characterised in that** the aforesaid longitudinal openings (12) in the rim (6) are somewhat narrower than the insert (11) with a difference in accordance with the thickness of the ridges (24) or a part thereof, such that the ridges (24) deform during the introduction in the longitudinal opening (12), as a result of which the insert (11) is fixed in the rim (6).

14. Rim (6) according to claim 12 or 13, **characterised in that** the rim (6) can be applied on wheel hubs (3) with varying pitches by providing an appropriate set (27) of inserts (11) from a series (28) in accordance with claim 10 or 11.

15. Rim (6) according to any one of claims 12 to 14, **characterised in that** it is made of aluminium.
